# EUROPÄISCHE PATENTANMELDUNG

(11) **EP 4 618 251 A1**
(43) Veröffentlichungstag der Anmeldung: **17.09.2025**
(21) Anmeldenummer: 25155578.5
(22) Anmeldetag: 03.02.2025
(51) Int. Cl.: H01M 10/6555, H01M 10/6557, C09J 7/22, C09J 7/38, C09J 7/20, H01M 10/613, H01M 10/625, H01M 10/653, H01M 10/6553, H01M 10/6551, C08K 3/04, C08K 3/22, C08K 3/34

(54) **KOMBINATION EINES WÄRMEERZEUGENDEN AGGREGATES UND EINES KLEBEBANDES IN EINEM KRAFTFAHRZEUG ZUM ZWECKE DER WÄRMEABFUHR**

(30) Priorität: 11.03.2024 DE 202024101176 U
(71) Anmelder: Certoplast Technische Klebebänder GmbH, 42285 Wuppertal (DE)
(72) Erfinder: Loder, Paul, 8341 Paldau (AT); Rambusch, René, 42113 Wuppertal (DE); Leermann, Timo, 42369 Wuppertal (DE)
(74) Vertreter: Andrejewski - Honke Patent- und Rechtsanwälte Partnerschaft mbB

(57) **Zusammenfassung**

Die Erfindung betrifft eine Kombination eines wärmeerzeugenden Aggregates (1), beispielsweise einer Energiespeicherzelle (1) eines Batteriemoduls, und eines Klebebandes (2) in einem Kraftfahrzeug zum Zwecke der Wärmeabfuhr, wobei das Klebeband (2) mit einem Folienträger (2a) und zumindest einer Klebemassenschicht (2b) auf einer Seite des Folienträgers (2a) ausgerüstet ist, und wobei das Klebeband (2) für einen thermischen Kontakt zwischen dem Aggregat (1) und einem Trägerelement (3) zum Halten und Kühlen des Aggregates (1) sorgt, dadurch gekennzeichnet, dass der Folienträger (2a) klebemassenseitig mit dem Aggregat (1) verklebt ist und an seiner freien geätzten Oberfläche (2c) - gegebenenfalls unter Zwischenschaltung einer wärmeleitenden Masse (2d) - mit dem Trägerelement (3) in Wärmekontakt steht, oder umgekehrt.

## Beschreibung

Die Erfindung betrifft die Kombination eines wärmeerzeugenden Aggregates, beispielsweise einer Energiespeicherzelle eines Batteriemoduls, und eines Klebebandes in einem Kraftfahrzeug zum Zwecke der Wärmeabfuhr, wobei das Klebeband mit einem Folienträger und zumindest einer Klebemassenschicht auf einer Seite des Folienträgers ausgerüstet ist, und wobei das Klebeband für einen thermischen Kontakt zwischen dem Aggregat und einem Trägerelement zum Halten und Kühlen des Aggregates sorgt.

Batterien bzw. Batteriemodule kommen heutzutage typischerweise in Kraftfahrzeugen mit Hybridantrieb oder rein elektrisch angetriebenen Kraftfahrzeugen zum Einsatz. Solche Batteriemodule setzen sich dazu aus einem oder mehreren Zellblöcken zusammen, die mehrere elektrisch in Reihe und/oder in Serie geschaltete Energiespeicherzellen aufweisen. Bei diesen Energiespeicherzellen kann es sich beispielsweise um Lithium-Ionen-Zellen handeln.

Um die Sicherheit, Funktion und Lebensdauer solcher Energiespeicherzellen zu gewährleisten, ist es erforderlich, diese innerhalb eines vorgegebenen Temperaturbereiches zu betreiben. Das setzt unter anderem voraus, dass Wärme abgeführt wird, die beispielsweise während der Leistungsabgabe oder beim Aufladen entsteht. Dadurch werden kritische Temperaturen vermieden. In diesem Zusammenhang wird die entstehende Verlustwärme in der Regel über eine Flüssigkeitskühlung oder Luftkühlung abgeführt.

Dem an dieser Stelle vorgesehenen Trägerelement zum Halten und Kühlen des Aggregates und insbesondere der einzelnen Energiespeicherzellen eines Batteriemoduls kommt dabei nicht nur eine tragende und haltende Funktion zu. Sondern das Trägerelement übernimmt auch eine Kühlfunktion, indem zwischen den einzelnen Energiespeicherzellen beispielsweise ein oder mehrere Kühlkanäle im Innern des Trägerelementes vorhanden sind. Der eine oder die mehreren Kühlkanäle können dabei mit einem Kühlmittel zur Wärmeabfuhr durchströmt werden. Außerdem greift man an dieser Stelle oftmals auf Trägerelemente aus Aluminium zurück, um einerseits das Gewicht des Kraftfahrzeuges niedrig zu halten und andererseits für die erforderliche Wärmeabfuhr von der betreffenden Energiespeicherzelle über das Klebeband, das Trägerelement und den hierin befindlichen Kühlkanal schließlich zum im Kühlkanal fließenden Kühlmittel zu gewährleisten.

Die Anbringung der einzelnen Energiespeicherzellen an beispielsweise einem flächigen Abschnitt des Trägerelementes kann mechanisch über Verbindungsmittel erfolgen. Oftmals ist an dieser Stelle auch das Klebeband zwischen der betreffenden Energiespeicherzelle und dem Trägerelement zwischengeschaltet, welches für den thermischen Kontakt zwischen dem Aggregat und dem Trägerelement zum Halten und Kühlen des Aggregates sorgt. So geht beispielsweise der gattungsbildende Stand der Technik nach der DE 10 2012 218 082 A1 vor.

Tatsächlich kommt an dieser Stelle eine doppelseitig klebende Folie zum Einsatz, die elektrisch isolierend ausgebildet ist und eine hohe Wärmeleitfähigkeit aufweist. Die doppelseitig klebende Folie übernimmt in diesem Zusammenhang auch die Funktion eines sogenannten Lückenfüllers bzw. gap fillers, sodass hierdurch auf einfache Art und Weise etwaige Unebenheiten zwischen der Oberfläche des Trägerelementes einerseits und der Oberfläche der Energiespeicherzelle andererseits zumindest teilweise ausgeglichen werden können.

Bei einem vergleichbaren Stand der Technik nach der DE 10 2013 207 536 B4 geht es um einen Zellblock für eine Batterie, welcher eine oder mehrere Batteriezellen aufweist. Dabei sind unter anderem ein Polverbindungsblech zur elektrischen Kopplung der einzelnen Energiespeicherzellen und eine Kühlplatte als Bestandteil des Trägerelementes realisiert. Zur galvanischen Trennung und zum besseren Wärmeübergang zwischen dem fraglichen Polverbindungsblech und der Kühlplatte kommt ein sogenannter gap filler zum Einsatz, bei dem es sich um ein beispielsweise wärmeleitendes Gel handelt oder handeln kann.

Der Stand der Technik hat sich grundsätzlich bewährt, bietet allerdings noch Raum für weitere Verbesserungen. Denn dem wärmeerzeugenden Aggregat und insbesondere der Energiespeicherzelle einerseits und dem Trägerelement andererseits kommt eine besondere Bedeutung zu, was den Wärmefluss bzw. die Wärmeabfuhr angeht. Das gilt nicht nur im Hinblick auf die Auslegung des Trägerelementes und etwaiger darin befindlicher Kühlkanäle für Kühlmittel, sondern auch und insbesondere für das Klebeband, welches für den notwendigen thermischen Kontakt zwischen dem fraglichen Aggregat und dem Trägerelement sorgt. Hier will die Erfindung insgesamt Abhilfe schaffen.

Der Erfindung liegt das technische Problem zugrunde, eine derartige Kombination so weiterzuentwickeln, dass die Wärmeabfuhr unter Berücksichtigung eines optimierten Klebebandes für den thermischen Kontakt zwischen dem Aggregat und dem Trägerelement gegenüber dem Stand der Technik verbessert ist.

Zur Lösung dieser technischen Problemstellung ist eine gattungsgemäße Kombination im Rahmen der Erfindung dadurch gekennzeichnet, dass der Folienträger klebemassenseitig mit dem Aggregat verklebt ist und an seiner freien geätzten Oberfläche - gegebenenfalls unter Zwischenschaltung einer wärmeleitenden Masse - mit dem Trägerelement in Wärmekontakt steht, oder umgekehrt.

Die Erfindung geht zunächst einmal von der Erkenntnis aus, dass das Klebeband zwischen dem wärmeerzeugenden Aggregat bzw. der Energiespeicherzelle einerseits und dem metallischen Trägerelement zum Halten und Kühlen des Aggregates andererseits hinsichtlich seiner Wärmeleitfähigkeit optimiert und gegenüber dem Stand der Technik verbessert werden kann. Dazu ist der Folienträger an seiner freien Oberfläche, d. h. nach außen bzw. in Richtung auf das Trägerelement weisend, geätzt ausgebildet. Dazu kann die fragliche freie Oberfläche des Folienträgers beispielhaft und vorteilhaft chemisch behandelt werden. Eine solche chemische Behandlung empfiehlt sich mithilfe einer Essigsäure, insbesondere Trichloressigsäure.

Grundsätzlich kann die freie Oberfläche des Folienträgers aber auch auf physikalische Art und Weise geätzt werden, beispielsweise mit Ionenstrahlen, Elektronen- oder Laserstrahlen. Ganz besonders bevorzugt ist an dieser Stelle eine Plasmabehandlung, die ähnlich wie bei einer Plasmabeschichtung für die gewünschte Aufrauhung der Oberfläche des Folienträgers sorgt. Darüber hinaus können selbstverständlich auch beide Oberflächen des Folienträgers mit der beschriebenen Ätzbehandlung bearbeitet werden, wobei dann anschließend auf eine der beiden geätzten Oberflächen die Klebemasse als Klebemassenschicht aufgebracht wird.

So oder so wird auf diese Weise die fragliche geätzte und dem Trägerelement zugewandte Oberfläche des Klebebandes mit einer signifikanten Aufrauhung ausgerüstet. Auf diese Weise können zunächst einmal etwaige Trennkräfte zwischen dem Folienträger einerseits und der Klebemassenschicht andererseits erhöht werden. Das gilt namentlich für die Variante, bei welcher die Klebemassenschicht auf die geätzte Oberfläche aufgebracht wird, also der Folienträger beidseitig geätzt ist. Grundsätzlich kann aber auch die geätzte freie Oberfläche dem Aggregat zugewandt sein. In diesem umgekehrten Fall ist das Klebeband mit dem Trägerelement verklebt. Im Allgemeinen erfolgt die Verklebung allerdings mit dem Aggregat.

Darüber hinaus sorgt die freie und geätzte sowie nach außen in Richtung auf das Trägerelement weisende Oberfläche des Folienträgers für eine erhöhte Wärmeleitung von der Energiespeicherzelle zum Trägerelement. Tatsächlich werden beispielsweise für unbehandelte Folienträger aus Kunststoff Wärmeleitfähigkeiten beobachtet, die in der Regel unterhalb von einem W/mK angesiedelt sind. Durch die Ätzbehandlung und die auf diese Weise realisierte zumindest eine freie geätzte Oberfläche des Folienträgers kann die Wärmeleitfähigkeit demgegenüber vervielfacht werden. Tatsächlich werden an dieser Stelle im Rahmen der vorliegenden Erfindung Wärmeleitfähigkeiten von 5W/mK bis hin zu 10 W/mK beobachtet.

Als geeignete Kunststoffe für den Folienträger haben sich erfindungsgemäß solche als günstig erwiesen, die auf Basis von insbesondere thermoplastischen Kunststoffen hergestellt werden. Beispielsweise kann der Folienträger auf Basis von PA (Polyamid), PU (Polyurethan), PVC (Polyvinylchlorid) usw. hergestellt werden. Ganz besonders hat sich an dieser Stelle eine Folie auf Basis von PET (Polyethylenterephthalat) als günstig erwiesen, weil sie die gewünschte Reißfestigkeit und einfache Verarbeitung bei zugleich konkurrenzfähigem Preis zur Verfügung stellt. Außerdem verfügen solche PET-Folien über eine hohe Wärmebeständigkeit und lassen sich besonders vorteilhaft mit der geätzten freien Oberfläche ausrüsten.

Als Klebemasse für die Klebemassenschicht hat sich eine solche Klebemasse als besonders günstig erwiesen, die aus der Gruppe Natur- oder Synthesekautschuk basierte Klebemassen und insbesondere UV-vernetzbare Polyakrylatklebemassen ausgewählt ist. Dabei wird an dieser Stelle in der Regel mit einem Auftragsgewicht der Klebemassenschicht auf den Folienträger im Bereich zwischen 15 g/m² bis 200 g/m² gearbeitet.

Um die Wärmeleitfähigkeit des solchermaßen realisierten Klebebandes noch zu erhöhen, hat es sich bewährt, wenn die Klebemassenschicht einen wärmeleitenden Füllstoff beinhaltet. Hierbei kann es sich beispielhaft um Graphit oder einen mineralbasierten Füllstoff handeln. In diesem Zusammenhang ist in der Regel zusätzlich sicherzustellen, dass das eingesetzte Klebeband durch etwaige eingebrachte Füllstoffe nicht eine Steigerung seiner elektrischen Leitfähigkeit erfährt. Vielmehr soll das Klebeband nach wie vor elektrisch isolierend aber zugleich wärmeleitfähig arbeiten und die beim Betrieb des Aggregates anfallende Verlustwärme besonders wirkungsvoll zum als gleichsam Wärmesenke fungierenden Trägerelement weiterleiten.

Der Folienträger als Bestandteil des Klebebandes kann seinerseits ein- oder mehrlagig ausgebildet sein. Grundsätzlich ist es auch denkbar, dass der Folienträger mit einer zusätzlichen Textilschicht ausgebildet ist, also beispielsweise eine Kombination einer PET-Folie mit einem Vlies oder einem Gewebe (ebenfalls aus PET) eingesetzt wird.

Darüber hinaus kann der Folienträger mit einer Flammschutzausrüstung ausgerüstet werden. Eine solche Flammschutzausrüstung des Folienträgers kann beispielsweise so vorgenommen werden, dass die Folie aus einem thermoplastischen Polyurethan hergestellt wird und als Flammschutzmittel mindestens ein Ester der Phosphorsäure oder einer Phosphonsäure zum Einsatz kommt. Eine solche Auslegung ist grundsätzlich bekannt, wozu auf die DE 10 2007 027 853 A1 hingewiesen wird.

Um die Wärmeleitung von dem wärmeerzeugenden Aggregat und beispielhaft der Energiespeicherzelle bis hin zum haltenden und kühlenden Trägerelement zusätzlich noch zu verbessern, kann die freie geätzte Oberfläche des Folienträgers unter Zwischenschaltung eines wärmeleitfähigen Klebers oder eines wärmeleitfähigen Gels als wärmeleitende Masse mit dem Trägerelement in Wärmekontakt stehen. Dabei hat es sich bewährt, als wärmeleitfähiges Gel ein solches auf beispielsweise Silikon- oder Aluminiumoxid-Basis einzusetzen. Der wärmleitfähige Kleber kann so ausgelegt werden, dass seine Klebemasse (wie diejenige des Klebebandes) mit einem wärmeleitenden Füllstoff auf beispielsweise Graphit- oder Mineralbasis ausgerüstet wird.

Der Folienträger verfügt in der Regel über eine Dicke von 5 µm bis 250 µm. Wie bereits erläutert, wird die Klebemasse mit einem Auftragsgewicht der Klebemassenschicht von 15 bis 200 g/m² auf den Folienträger aufgebracht. Durch die freie geätzte Oberfläche und die auf diese Weise gesteigerte Wärmeleitfähigkeit lassen sich hierdurch bereits Werte der Wärmeleitfähigkeit von wenigstens 5W/mK erreichen. Diese können dann noch auf bis zu 10 W/mK gesteigert werden, wenn die Klebemassenschicht mit einem wärmeleitenden Füllstoff ausgerüstet wird und im Übrigen die freie geätzte Oberfläche des Folienträgers unter Zwischenschaltung der wärmeleitenden Masse und insbesondere des wärmeleitfähigen Gels auf Silikon-Basis in Wärmekontakt mit dem Trägerelement gebracht wird. Hierin sind die wesentlichen Vorteile zu sehen.

Nachfolgend wird die Erfindung anhand einer lediglich ein Ausführungsbeispiel darstellenden Zeichnung näher erläutert; es zeigen:
- Fig. 1: den Grundaufbau der beanspruchten Kombination eines wärmeerzeugenden Aggregates und eines Klebebandes in einem Kraftfahrzeug zum Zwecke der Wärmeabfuhr und
- Fig. 2: das eingesetzte Klebeband im schematischen Querschnitt.

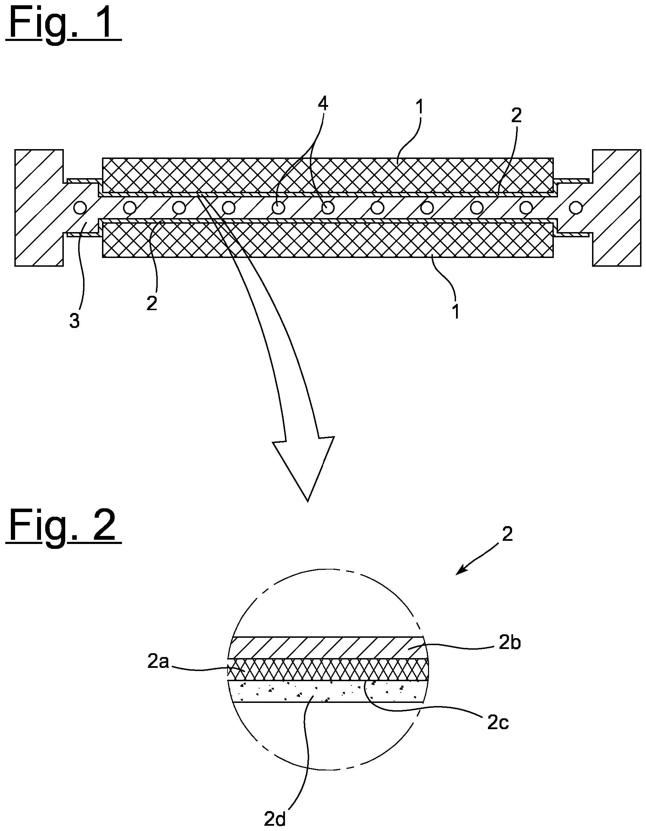

In der Fig. 1 ist die Kombination eines wärmeerzeugenden Aggregates 1 und eines Klebebandes 2 in einem nicht näher dargestellten Kraftfahrzeug zum Zwecke der Wärmeabfuhr wiedergegeben. Bei dem Aggregat 1 handelt es sich im Rahmen des Ausführungsbeispiels und nicht einschränkend um eine Energiespeicherzelle 1 eines in der Fig. 1 schematisch und auszugsweise wiedergegebenen Batteriemoduls. Tatsächlich sind an dieser Stelle zwei Energiespeicherzellen 1 dargestellt, die beidseitig eines mittigen Trägerelementes 3 angeordnet sind.

Das Trägerelement 3 mag zu diesem Zweck mit einer Anlagefläche für die sich gegenüberliegenden Energiespeicherzellen 1 ausgerüstet sein. Dazu ist die fragliche Anlagefläche des Trägerelementes 3 mit angedeuteten Kühlkanälen 4 ausgerüstet, die von einem nicht näher spezifizierten Kühlmittel zur Wärmeabfuhr durchflossen werden.

Nach dem Ausführungsbeispiel sind die beiden sich gegenüberliegenden Energiespeicherzellen 1 jeweils unter Zwischenschaltung des Klebebandes 2 mit dem Trägerelement 3 bzw. der an dieser Stelle realisierten Anlagefläche mit den Kühlkanälen 4 wärmetechnisch und gegebenenfalls auch mechanisch verbunden. Jedenfalls sorgt das jeweils zwischen der Energiespeicherzelle 1 und dem Trägerelement 3 zwischengeschaltete Klebeband 2 dafür, dass ein thermischer Kontakt zwischen dem Aggregat bzw. der jeweiligen Energiespeicherzelle 1 und dem Trägerelement 3 zum Halten und Kühlen der betreffenden Energiespeicherzelle 1 gewährleistet ist.

Zu diesem Zweck ist das zwischengeschaltete Klebeband 2 entsprechend der Schnittdarstellung in der Fig. 2 im Detail aufgebaut. Man erkennt, dass das Klebeband 2 mit einem Folienträger 2a ausgerüstet ist. Auf den Folienträger 2a ist einseitig eine Klebemassenschicht 2b aufgebracht. Der Folienträger 2a ist nach dem Ausführungsbeispiel als PET-Folie ausgelegt. Bei der Klebemassenschicht 2b handelt es sich um eine solche aus einem UV-vernetzbaren Acrylartklebstoff. Das gilt selbstverständlich nur im Rahmen des wiedergegebenen Ausführungsbeispiels und ist keinesfalls einschränkend zu verstehen.

Von wesentlicher Bedeutung ist nun noch der Umstand, dass die freie Oberfläche 2c des Folienträgers 2a geätzt ausgebildet ist. Dazu mag der Folienträger 2a nach dem Ausführungsbeispiel beidseitig mit einer Essigsäure und insbesondere Trichloressigsäure behandelt worden sein, sodass die jeweilige Oberfläche des Folienträgers 2a geätzt ausgebildet ist. Auf eine dieser beiden Oberflächen wird anschließend die Klebemassenschicht 2b in Gestalt des UV-vernetzbaren Acrylatklebstoffes aufgebracht. Das kann dadurch erfolgen, dass der fragliche Acrylatklebstoffes im Heißschmelzverfahren über eine Düse auf den Folienträger 2a aufgebracht wird.

Die freie geätzte Oberfläche 2c des Folienträgers 2a ist nun entsprechend der Darstellung in den Fig. 1 und 2 unter Zwischenschaltung einer wärmeleitenden Masse 2d mit dem Trägerelement 3 wärmeleitend verbunden. Bei der wärmeleitenden Masse 2d handelt es sich im Rahmen des Ausführungsbeispiels um einen wärmeleitenden Kleber oder ein wärmeleitfähiges Gel, wie dies einleitend bereits beschrieben wurde. Grundsätzlich kann hierauf aber auch verzichtet werden.

Nach dem Ausführungsbeispiel ist der Folienträger 2a einlagig ausgebildet. Die Erfindung umfasst grundsätzlich aber auch mehrlagig ausgelegte Folienträger 2a. Nicht dargestellt ist die weitere Möglichkeit, dass der Folienträger 2a eine Flammschutzausrüstung aufweist, die ebenfalls einleitend bereits beschrieben worden ist.

Man erkennt, dass im Rahmen des Ausführungsbeispiels die freie geätzte Oberfläche 2c des Folienträgers 2a unter Zwischenschaltung des wärmeleitfähigen Gels 2d mit dem Trägerelement 3 im Wärmekontakt steht. Anstelle des wärmeleitfähigen Gels 2d kann an dieser Stelle auch auf einen wärmeleitfähigen Kleber zurückgegriffen werden. Bei dem wärmeleitfähigen Gel 2d handelt es sich im Rahmen des Ausführungsbeispiels um ein solches auf Silikonbasis.

Der Folienträger 2a verfügt seinerseits über eine Dicke von 5 µm bis 250 µm. Die Klebemasse 2b ist mit einem Auftragsgewicht der Klebemassenschicht 2b im Bereich zwischen 15 bis 200 g/m² auf den Folienträger 2a aufgebracht. Nicht dargestellt ist die weitere Möglichkeit, dass die Klebemassenschicht 2b zusätzlich mit einem wärmeleitenden Füllstoff wie beispielsweise Graphit ausgerüstet ist, um insgesamt die Wärmeleitfähigkeit des Klebebandes 2 zu erhöhen. Nach dem Ausführungsbeispiel wird an dieser Stelle eine Wärmeleitfähigkeit zwischen 5 bis 10 W/mK beobachtet.

Gegenstand der Erfindung ist auch die Verwendung des Klebebandes 2 in einem Kraftfahrzeug zum Zwecke der Wärmeabfuhr, wobei das Klebeband 2 mit dem Folienträger 2a und zumindest der Klebemassenschicht 2b auf einer Seite des Folienträgers 2a ausgerüstet ist, und wobei das Klebeband 2 für den thermischen Kontakt zwischen dem wärmeerzeugenden Aggregat 1 und beispielsweise der Energiespeicherzelle 1 einerseits und dem Trägerelement 3 zum Halten und Kühlen des Aggregates 1 andererseits sorgt. Dazu ist der Folienträger 2a klebemassenseitig mit dem Aggregat 1 verklebt und steht an seiner freien geätzten Oberfläche 2c mit dem Trägerelement 3 im Wärmekontakt. Dabei mag die wärmeleitende Masse 2d zwischengeschaltet sein.

## Patentansprüche

1. Kombination eines wärmeerzeugenden Aggregates (1), beispielsweise einer Energiespeicherzelle (1) eines Batteriemoduls, und eines Klebebandes (2) in einem Kraftfahrzeug zum Zwecke der Wärmeabfuhr, wobei das Klebeband (2) mit einem Folienträger (2a) und zumindest einer Klebemassenschicht (2b) auf einer Seite des Folienträgers (2a) ausgerüstet ist, und wobei das Klebeband (2) für einen thermischen Kontakt zwischen dem Aggregat (1) und einem Trägerelement (3) zum Halten und Kühlen des Aggregates (1) sorgt,
**dadurch gekennzeichnet, dass**
der Folienträger (2a) klebemassenseitig mit dem Aggregat (1) verklebt ist und an seiner freien geätzten Oberfläche (2c) - gegebenenfalls unter Zwischenschaltung einer wärmeleitenden Masse (2d) - mit dem Trägerelement (3) in Wärmekontakt steht, oder umgekehrt.

2. Kombination nach Anspruch 1, **dadurch gekennzeichnet, dass** zumindest die freie Oberfläche (2c) des Folienträgers (2a) mithilfe einer Essigsäure, insbesondere Trichloressigsäure, geätzt ist.

3. Kombination nach Anspruch 1 oder 2, **dadurch gekennzeichnet, dass** die Klebemassenschicht (2b) aus der Gruppe Natur- oder Synthesekautschuk basierte Klebemassen und insbesondere UV-vernetzbare Polyakrylatklebemasse ausgewählt ist.

4. Kombination nach einem der Ansprüche 1 bis 3, **dadurch gekennzeichnet, dass** das Auftragsgewicht der Klebemassenschicht (2b) 15 bis 200 g/m² beträgt.

5. Kombination nach einem der Ansprüche 1 bis 4, **dadurch gekennzeichnet, dass** die Klebemassenschicht (2b) einen wärmeleitenden Füllstoff wie beispielsweise Graphit oder ein Mineral beinhaltet.

6. Kombination nach einem der Ansprüche 1 bis 5, **dadurch gekennzeichnet, dass** der Folienträger (2a) auf Basis von Polyamid, Polyurethan, Polyvinylchlorid und insbesondere Polyethylenterephthalat hergestellt ist.

7. Kombination nach einem der Ansprüche 1 bis 6, **dadurch gekennzeichnet, dass** der Folienträger (2a) ein- oder mehrlagig ausgebildet ist.

8. Kombination nach einem der Ansprüche 1 bis 7, **dadurch gekennzeichnet, dass** der Folienträger (2a) eine Flammschutzausrüstung aufweist.

9. Kombination nach einem der Ansprüche 1 bis 8, **dadurch gekennzeichnet, dass** die freie geätzte Oberfläche (2c) des Folienträgers (2a) unter Zwischenschaltung eines wärmeleitfähigen Klebers oder eines wärmeleitfähigen Gels als wärmeleitende Masse (2d) mit dem Trägerelement (3) im Wärmekontakt steht.

10. Kombination nach Anspruch 9, **dadurch gekennzeichnet, dass** als wärmeleitfähiges Gel ein solches auf Silikon- oder Aluminiumoxid-Basis eingesetzt wird.

11. Kombination nach einem der Ansprüche 1 bis 10, **dadurch gekennzeichnet, dass** der Folienträger (2a) eine Dicke von 5 µm bis 250 µm aufweist.

12. Verwendung eines Klebebandes (2) mit einem Folienträger (2a) und zumindest einer Klebemassenschicht (2b) auf einer Seite des Folienträgers (2a) zum Zwecke der Wärmeabfuhr, wobei das Klebeband (2) für einen thermischen Kontakt zwischen einem Aggregat (1) und beispielsweise einer Energiespeicherzelle (1) eines Batteriemoduls und einem Trägerelement (3) zum Halten und Kühlen des Aggregates (1) sorgt, und wobei der Folienträger (2a) klebemassenseitig mit dem Aggregat (1) verklebt ist und an seiner freien geätzten Oberfläche (2c) - gegebenenfalls unter Zwischenschaltung einer wärmeleitenden Masse (2d) - mit dem Trägerelement (3) in Wärmekontakt steht.
